# EUROPEAN PATENT APPLICATION

(11) **EP 0 817 085 A1**
(43) Date of publication of application: **07.01.1998**
(21) Application number: 96110204.3
(22) Date of filing: 25.06.1996
(51) Int. Cl.: G06F 13/28, G06F 13/12

(54) **Addressing means and method**

(71) Applicant: MOTOROLA, INC., Schaumburg, IL 60196 (US)
(72) Inventor: Neustadter, Marc, Jerusalem 92268 (IL); Shtayer, Ronen, Herzlia 46364 (IL); Natan, Rami, Ramat Gan 52363 (IL)
(74) Representative: Richardt, Markus Albert

(57) **Abstract**

An electronic system (10') has an address generator (40) for generating a sequence of addresses (80-95, 80'-94'), each address (80-95, 80'-94'), having a first portion address (98) and a second portion address (97) and a peripheral (30') having therein locations (770, 770') able to store data wherein each location (770, 770') corresponds to a second portion address (98). The peripheral (30') has therein an address decoder (70) coupled to the address generator (40) for accessing the same second portion address (98) for different values of the first portion address (97).

## Description

### Field of the invention

The present invention concerns an improved system and method for cyclically accessing or storing data in registers or other memory.

### Background of the Invention

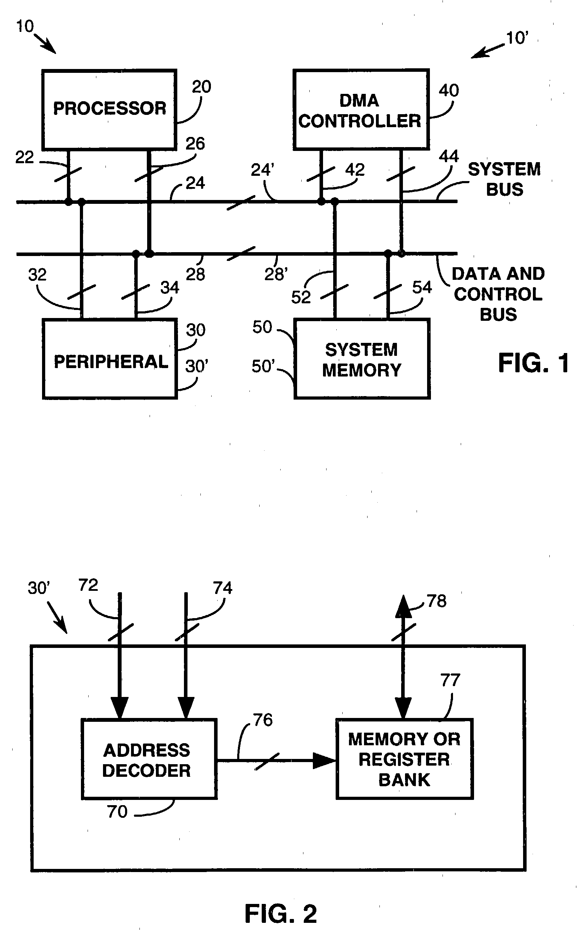

It is well known in the electronic art to utilize electronic systems employing, for example, Direct Memory Access (DMA) capability so that the load on the system processor is reduced and overall performance is enhanced. FIG. 1 illustrates, using un-primed reference numbers, prior art electronic system 10 having processor 20, peripheral 30, DMA controller 40 and system memory 50. Processor 20 is coupled by signal lines 22 to system bus 24 and by signal lines 26 to data and control bus 28. System bus 24 generally carries, among other things, addresses which identify peripheral 30 or other system element, e.g., memory 50, and the memory locations within the peripheral or other element where a particular set of data or program control instructions present on bus 28 are intended to be stored or read. Buses 24 and 28 can also carry other types of signals, the exact nature of which is not important to the present invention.

Peripheral 30 is coupled by signal lines 32, 34 to buses 24, 28, respectively; DMA controller 40 is coupled by signal lines 42, 44 to buses 24,28, respectively, and system memory 50 is coupled by signal lines 52, 54 to buses 24, 28, respectively. The general function, construction and integration of elements such as for example, processor 20, peripheral 30, DMA controller 40 and system memory 50 are well understood by those of skill in the art and need not be described further here.

One of the limitations of a conventional DMA controller is that in order to access a particular memory space in a peripheral (or in system memory), it must be given specific instructions (e.g., by processor 20) as to the memory or register locations to be read from and written to each time a data transfer is to be executed by the DMA controller. Ordinarily, issuing such instructions to DMA controller 40 does not unduly burden processor 20. However, when it is desired to cyclically or repetitively read and/or write, from and/or to a given register bank or memory space in peripheral 30 and/or memory 50, present day DMA controllers force the processor (or other source of DMA instructions) to regenerate the read/write addresses for each cycle or repetition. It is generally not possible with present day DMA controllers to issue a single comprehensive instruction for the entire repetitive read/write sequence and have the DMA controller execute this without further input from the processor (or other source of DMA instructions). Accordingly, there continues to be a need for an improved means and method by which a system can cause a DMA controller to repetitively or cyclically execute a read/write (or other fetch/store operation) based on a single instruction covering the whole repetitive sequence.

### BRIEF DESCRIPTION OF THE DRAWINGS

FIG. 1 is a simplified schematic diagram of a system employing a processor, DMA controller, one or more peripherals and memory, where un-primed reference numbers refer to a prior art system and primed numbers refer to the invented system;
FIG. 2 is a simplified schematic diagram of a peripheral or other element for use in a system analogous to that shown in FIG. 1, but according to a preferred embodiment of the present invention;
FIG. 3 is a simplified representation of a peripheral or memory addressing arrangement to be issued by the DMA, according to the present invention;
FIG. 4 is a representation similar to FIG. 3 but according to a further embodiment of the present invention;
FIG. 6 is a simplified flow chart illustrating the practice of a preferred embodiment of the method of the present invention; and

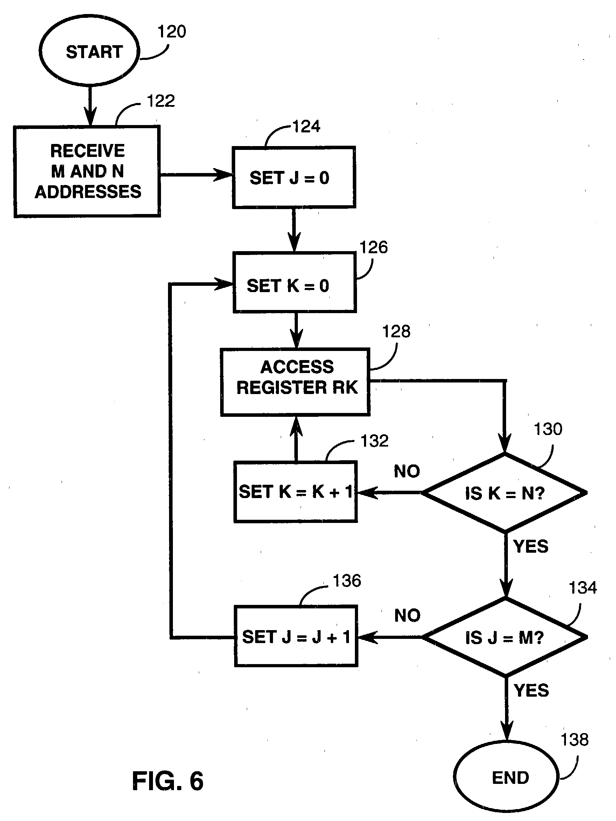

FIG. 6 is a simplified logic diagram of an address decoder for use in the present invention.

### DETAILED DESCRIPTION OF THE PREFERRED EMBODIMENT

FIG. 1 illustrates (using un-primed reference numbers) conventional system 10 employing processor 20, one or more peripherals 30, DMA controller 40, and memory 50. For purposes of explanation and not intended to be limiting, it is assumed that peripheral 30 contains a register bank which is to be repetitively read and the data therein transferred to system memory 50. Persons of skill in the art will understand that peripheral 30 can also be a memory or that the operation can also be run in the other direction, that is, reading data from memory 50 and transferring it to a register bank or other memory element in peripheral 30. Thus, the description which follows, while given in terms of reading a register bank in peripheral 30 and transferring the data therein to memory 50, is intended to represent either direction of data flow and peripheral 30 is intended to refer to any element wherein data can be stored or read. The same applies to the primed counterparts of these elements relating to the present invention.

Processor 20 issues an instruction to DMA controller 40 identifying the particular peripheral 30 which is to be addressed and the particular register bank within peripheral 30 which is to be read and the location in memory 50 where the data from the register bank of peripheral 30 is to be stored, awaiting further operations. As used herein, the word "data" is intended to include any kind of information or instructions.

Persons of skill in the art will understand that the source of instructions for DMA controller 40 can be processor 20 or any other element in system 10, and that processor 20 is intended to be representative of any source of instructions to DMA controller 40. Similarly, the destination of the data read from peripheral 30 can be system memory 50 or another peripheral or other element in system 10 and hence, the term "memory 50" is intended to represent any destination. The same is true for the elements designated by primed reference numbers.

In a typical situation, the instructions to DMA controller 40 include the address of the peripheral, the addresses of the first and last registers to be read (or equivalent), and the addresses of the data destinations, e.g., in memory 50. With conventional DMA controllers, once the DMA controller has cycled through the register addresses, e.g., read the last of the registers in peripheral 30 and stored the result at the specified destinations, it terminates operation. In order to have DMA controller 40 read the same registers a second time, a new instruction must be issued by processor 20 to DMA controller 40. This consumes additional processor and bus time and slows overall operation of system 10. This problem is avoided by means of the present invention incorporating the elements designated by primed reference numbers in FIGS. 1-2.

FIG. 2 is a simplified schematic diagram of peripheral 30' for use in system 10' analogous to that shown in FIG. 1, but according to a preferred embodiment of the present invention. Those of skill in the art will understand that, for convenience of explanation and not intended to be limiting, the operation of the invented system is described for the situation in which registers in peripheral 30' are interrogated and their contents stored in memory 50'. However, the reverse operation is also contemplated, that is, memory 50' is interrogated and the results stored in peripheral 30'. Thus, the present invention is intended to apply to any type of transfer and any type of data or instructions.

Primed reference numbers in FIGS. 1 and 2 indicate that the designated element performs a function analogous to the un-primed, prior art element, but modified to incorporate the features of the present invention. For example, invented system 10' is analogous to prior art system 10 but with, for example, peripheral element 30' according to the present invention substituted for prior art element 30. System 10' desirably but not essentially also includes memory 50' and buses 24', 28' analogous to corresponding un-primed elements in system 10. System 10' can further optionally have, modified instructions or programming code which controls operation of system 10' stored, for example, in memory 50'.

Peripheral 30' comprises address decoder 70 which receives addresses from system bus 24' of system 10' via signal lines 72, and register bank 77 which is coupled to data and control bus 28' by signal lines 78. Address decoder 70 has register select output 76 coupled to register bank 77 and has optional mode select input 74. Mode select input 74 allows the operation of address decoder 70 to be modified or programmed, either externally or under the direction of processor 20, e.g., by connection directly to processor 20 or via bus 28, so that the operation described herein is obtained. Persons of skill in the art will understand based on the description herein how to construct a programmable decoder having the desired properties.

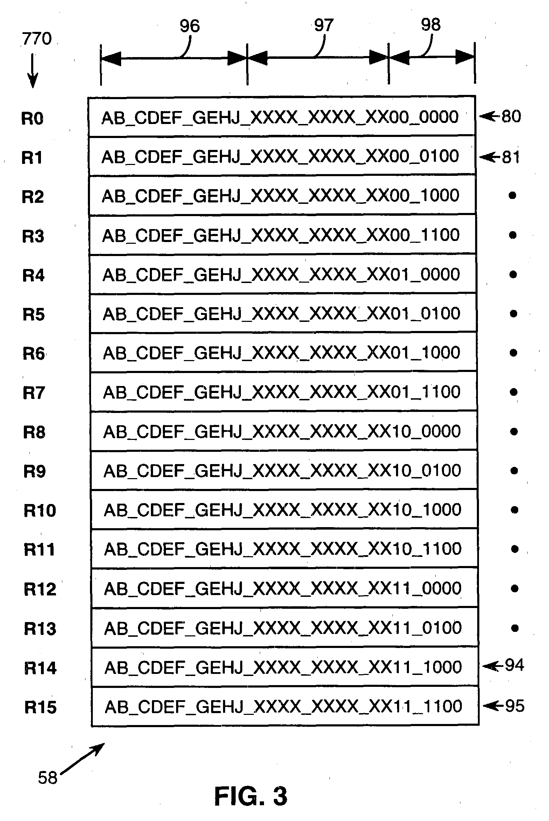

Register select output lines 76 carry signals that select various registers in register bank 77. Registers 770 in bank 77 (e.g., registers R0-R15 in FIG. 3) can be of any desired length. Bank 77 can have any number of registers 770. For purposes of illustration and not intended to be limiting, it is assumed that register bank 77 contains, for example, sixteen registers R0-R15 to be cyclically accessed.

FIG. 3 is a simplified representation of address structure 58 comprising addresses 80-95 used in connection with registers 770 (e.g., R0-R15) of peripheral 30' of the present invention. The designations R0-R15 at the left of address structure 58 indicate corresponding registers one through sixteen of register bank 77. Address structure 58 shows for each register R0-R15, register address 80-95 supplied to interrogate the corresponding register. For example, to interrogate register R0, register address 80 equal to:
AB_CDEF_GEHJ_XXXX_XXXX_XX00_0000
is supplied to address decoder 70. Decoder 70 then provides the corresponding register select output on lines 76 to transfer the contents of register R0 to a predetermined location in memory 50'.

Address portion 96 represented by AB_CDEF_GEHJ is, conveniently but not essentially, the address designating peripheral 30'. The letters AB_CDEF_GEHJ represent any peripheral address in any convenient representation. This address portion will generally be the same for all of the registers in a particular peripheral. The length (e.g., the number of bits) of address portion 96 depends upon the number of peripherals or other elements that system 10' is required to address. While address portion 96 is shown in FIG. 3 as having a specific length, this is merely by way of example and a larger or smaller address space can also be employed, depending upon the needs of the user.

Address portion 98 conveniently but not essentially identifies the specific register of register bank 77 that is to be interrogated. It will be noted that address portion 98 of register addresses 80-95 is different for each of the registers R0-R15.

Address portion 97 represented by XXXX_XXXX_XX is, conveniently but not essentially, a "don't care" address space that determines the number of iterations to be made through registers 770 of register bank 77. The term "don't care" means that address decoder 70 provides a corresponding register select signal on register select output lines 76 to register bank 77, irrespective of the value of each "X" in address portion 97.

For example, register R0 is selected each time the register address:
AB_CDEF_GEHJ_XXXX_XXXX_XX00_0000
is supplied to decoder 70, for all values of XXXX_XXXX_XX (e.g., each X can equal 1 or 0). With this arrangement, the address space XXXX_XXXX_XX determines how many iterations will be performed through register bank 77. Persons of skill in the art will understand that each time register R0 (or any other register) is interrogated it can contain the same or different data as was obtained during a previous (or subsequent) interrogation.

While address portions 96-98 of register addresses 80-95 are shown in FIG. 3 as having particular lengths and being arranged in a specific sequence, this is merely for purposes of illustration and not intended to be limiting. Portions 96-98 can be arranged in any predetermined order and have lengths suited to the user's system. However, it is especially convenient to have portion 97 be of higher order relative to portion 98. In this way, when DMA controller 40 issues sequentially incremented addresses, the desired number of registers are cyclically accessed the desired number of times.

It is desirable but not essential that there be at least: (i) a first register select address space (e.g., portion 98), and (ii) a second (number of cycles) address space (e.g., portion 97), as a part of the register address. The first, register select, address space determines the number of registers being interrogated, and the second (e.g."don't care") address space determines the number of times the registers will be interrogated (i.e., the number of cyclic repetitions).

For example, suppose that there are 16 registers of 32 bits length that are to be interrogated 1024 times. Then address portion 98 can have at least 6 bits which increment by 4 each time and address portion 97 can have at least 10 bits. As noted above, it is desirable that re-cycle address portion 97 be a higher order address portion relative to register select address portion 98. This arrangement is shown by way of example in FIG. 3.

To illustrate the example presented above wherein 16 registers of 32 bit length are to be interrogated 1024 times, DMA controller 40 (or other address generator) is instructed to generate addresses starting at, for example:
AB_CDEF_GEHJ_0000_0000_0000_0000
incrementing by 4 (e.g., as in portion 98 of FIG. 3) and ending at:
AB_CDEF_GEHJ_1111_1111_1111_1100.
This causes peripheral 30' to cyclically or repetitively read registers R0-R15 a total of 1024 times. Only one instruction to DMA controller 40 is needed, that is, it is not necessary to repeat the "read registers R0-R15" instruction to DMA controller 40 for each of the 1024 iterations. While the present invention is, for convenience, described in terms of the register addresses being generated by DMA controller 40, persons of skill in the art will understand based on the description herein that the desired addresses can be provided by any suitable address generator.

It will be noted that DMA controller 40 need not be modified in any way. This has great practical utility since existing DMA controllers can be employed without change. The modification of the system behavior is accomplished by incorporating "don't care" address portion 97 in register addresses 80-95 to be generated by DMA 40 and by programming address decoder 70 to ignore "don't care" address portion 97, i.e., to treat any values of "X" as a valid addresses.

It is convenient to include peripheral address portion 96 as a part of register address 80-95, but this is not essential since peripheral select can be provided in different ways (e.g., by a specific peripheral select line) and need not be a part of register address 80-95.

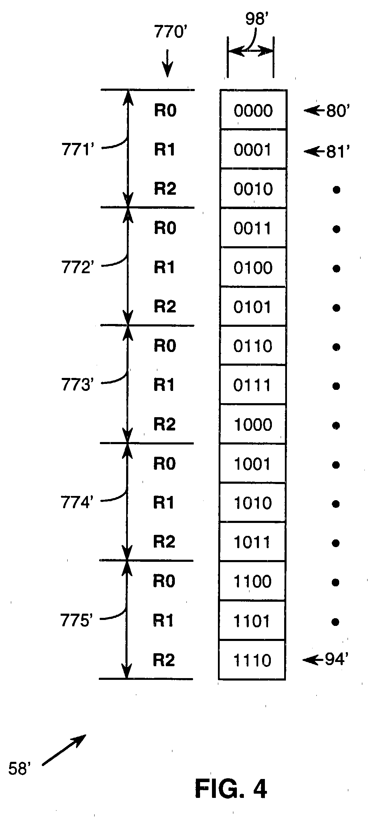

FIG. 4 is a representation similar to FIG. 3 but according to a further embodiment 58' of the present invention, illustrating the case of three registers 770' (e.g., R0, R1, R2) being accessed five times 771'-774'. Address space 98' in this example is not divided in a binary fashion into first and second sub-addresses spaces respectively identifying the number of registers and the number of repetitions. Rather, in the implementation of FIG. 4, DMA controller 40 ( or other address generator) is instructed to generate sequential addresses beginning at 0000 and continuing to 1110. Address decoder 70 is programmed, e.g., by use of input 74 or by internally stored instructions, to reissue an access instruction to register R0 on the 1st, 4th, 7th, 10th and 13th sequential address, to register R1 on the 2nd, 5th, 8th, 11th and 14th sequential address and to register R2 on the 3rd, 6th, 9th, 12th and 15th sequential address. This can be easily accomplished by including a programmable counter or divider.

In the case of the example of FIG. 4, the counter or divider causes the register access command on line 76 to be set to R0 when the equation (Address = n x N) is satisfied where n is an integer having values 0, 1, 2, 3, ...., and N = 1, 2, 3, ....16, ...., is the number of registers, and equivalently for registers R0 and R1. Thus, for N = 3, address 0000 corresponds to n = 0 x 3 and register R0 is selected, addresses 0001 and 0010 sequentially select the next two registers R1 and R2 respectively, address 0011 corresponds to n = 1 x 3 and register R0 is re-selected and addresses 0100 and 0101 sequentially select the next two registers R1 and R2 again, address 0110 corresponds to n = 2 x 3 and register R0 is selected again, and so forth. In this manner, the desired address space by which N registers are read M times is mapped into a single address space of size N x M and DMA 40 need only generate a continuous range of addresses sufficient to cover the N x M address space.

In the implementation of FIG. 4, there is not a separately identifiable address portion corresponding to N and another address portion corresponding to M analogous to portions 98, 97 of FIG. 3. Rather, the N x M address space is subdivided into M blocks of N contiguous addresses. In the example of FIG. 4, M = 5 and N = 3. Thus, there are five blocks of three consecutive addresses each.

It is desirable for achieving simplicity of address generator 40 and decoder 70, that the addresses be contiguous (each subsequent address equals the previous address plus a fixed increment) , as for example, in the manner illustrated in FIGS. 3-4, but this is not essential. While the implementation of FIG. 4 has been illustrated for the example where N = 3 and M = 5, persons of skill in the art will understand that N and M can have any desired values, depending upon the needs of the user.

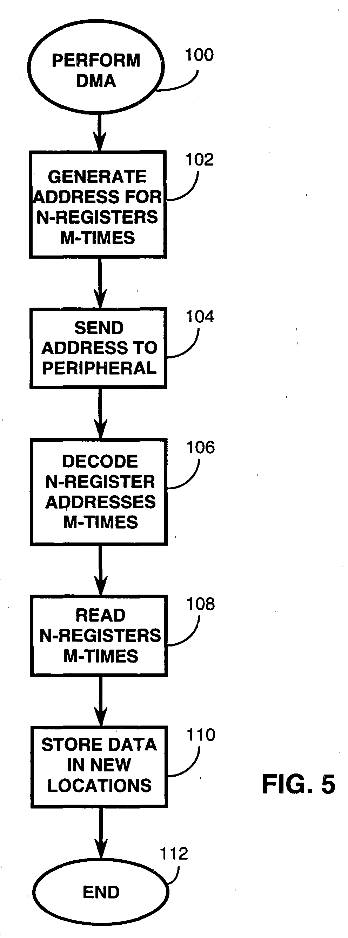

FIG. 5 is a simplified flow chart illustrating the practice of a preferred embodiment of the method of the present invention as applied to DMA operation 100. In step 102, an address generator (e.g., within DMA 40 or elsewhere) is operated to generate M x N contiguous addresses, e.g.,, a first part having an address space corresponding to the number N of registers to be read and the second part having an address space corresponding to the number M of iterations or cycles or times that the N-registers are to be read. Thus, the total address space is M x N. In the preferred embodiment, the M address space is the higher order address space of the combined M x N address space.

In step 104, the addresses are sent to the desired peripheral which in step 106 decodes the N-register addresses M times and in step 108 reads the N registers M times. In step 110, the data read from the N registers is stored in the new locations identified in, for example, the original DMA controller instruction (not shown) and the process ends as indicated at 112. Those of skill in the art will understand based on the description herein, that the "store-data" operation in step 110 generally occurs incrementally (e.g., read-store-read-store-etc.) during each cyclic iteration of reading the N-registers, but this is not essential.

It will be apparent that the above-described invention provides a particularly convenient way in which to cause a system, especially a system employing a DMA controller, to cyclically read data from one set of registers or memory locations and transfer it to other memory locations without requiring that the system processor or other address generator or master controller regenerate the addresses of the set of registers for each cyclic iteration. By using an address space that contains both the specific register addresses as well as the number of desired iterations of re-reading the registers, the read-store process can be launched with a single set of instructions. This reduces the load on the system processor or master controller and makes the system operation more efficient. The same principle can be used to read data from any source and cyclically write it to a predetermined set of registers using a single write instruction.

FIG. 6 is a simplified logic diagram of address decoder 70 according to a preferred embodiment of the present invention. The logic diagram 120-138 illustrated in FIG. 6 can be implemented in software or hardware. For simplicity, the write or store operations that result from accessing registers 770 (e.g., register RK where K is an index) have been omitted from FIG. 6.

In logical step 122, decoder 70 receives the desired M x N register addresses where N identifies the number of registers desired to be read and M identifies the number of repetitions, that is, the number of times that the N registers are to be read. In logical step 124, an index J is set to zero, and in step 126 index K is set to zero. In step 128 a register select command is generated to access register RK. For the condition where K= 0, the select command is generated to access register R0, where K = 1, to access register R1, and so forth.

In logical decision step 130, the value of K is tested to determine whether it is equal to N. If the outcome of logical query 130 is "NO" then control proceeds to logical step 132 where the value of K is incremented by one unit and operation returned to logical step 128 to generate the register select command to access the register corresponding to the new value of K. This loop-back operation continues until all N registers have been accessed and the outcome of query 130 is "YES". Operation then proceeds to query 134 where the value of J is tested to determine if it is equal to M. If the outcome of query 130 is "NO", then the value of J is incremented by one and operation loops back to logical step 126 wherein K is set to zero and the N registers are read again for the new value of J. This operation continues until all N registers have been read M times and the outcome of query 134 is "YES", whereupon the process ends.

While the construction and operation of the improved addressing arrangement and method have been described by way of exemplary arrangements, those of skill in the art will understand that other implementations can also be made without departing from the teachings herein. For example, while the invented arrangement and method are particularly useful in connection with DMA controllers, they apply to any addressing arrangement in which it is desired to, for example, read N registers M times without issuing separate intermediate instructions to the address generator or operation controller. Further, persons of skill in the art will understand based on the description herein that there are many equivalent ways of generating the desired register select outputs based upon the address inputs, and that the present invention is not intended to be limited to the particular means and method illustrated in FIG. 2-6. Accordingly, it is intended to include these more general aspects of the invention in the claims that follow.

## Claims

1. An electronic system (10') comprising:
a direct access controller (40) for generating N x M addresses;
a peripheral (30') having N data stores (77) of length L;
an address decoder (70) for receiving the N x M addresses and generating therefrom access commands (76) for cyclically accessing the N data stores (77) M times.

2. The system(10') of claim 1 wherein the N x M address space has a first portion (98) providing N contiguous addresses and a second, higher order portion (97), providing M contiguous addresses.

3. An electronic system (10') comprising:
an address generator (40) for generating a sequence of addresses, each address having a first portion address (97) and a second portion address (98); and
a peripheral (30') having therein locations (77, 770) able to store data wherein each location (770) corresponds to the second portion address (98), and having therein an address decoder (70) coupled to the address generator (40) and the locations (77, 770), for accessing the same second portion address (98, 84-95) for different values of the first portion address (97).

4. The system (10') of claim 3 further comprising means (96) for selecting the peripheral (30').

5. The system (10') of claim 3 wherein the first portion address (97) has a predetermined number of distinct values and the second portion address (98) is accessed a number of times M equal to the number of distinct values of the first portion address (97).

6. The system (10') of claim 3 wherein the address generator (40) generates the second portion addresses (98) sequentially and the address decoder (70) accesses each location (770) sequentially.

7. The system (10') of claim 6 wherein the address decoder (70) repetitively accesses each location (770) sequentially according to the number M of the first portion addresses (97).

8. A method (100, 120) for cyclically accessing N memory locations (770, 770') M times in a system (10'), using a single N x M address space comprising:
generating a single set of contiguous N x M addresses;
sending the N x M addresses to a peripheral having the N memory locations; and
decoding the N x M addresses so as to cyclically access the N memory locations M times.

9. The method(100, 120) of claim 8 wherein the single address space has two sequential address portions (98,97), a first address portion (98) which identifies the N memory locations (770, 7670') and a second address portion (97) which defines the number of times M for cyclically accessing the N memory locations (770, 770').

10. The method (100, 120) of claim 9 wherein the second address portion (97) is of higher order than the first address portion (98).
